# EUROPÄISCHE PATENTSCHRIFT

(11) **EP 2 043 490 B1**
(45) Veröffentlichungstag und Bekanntmachung des Hinweises auf die Patenterteilung: **07.08.2019**
(21) Anmeldenummer: 07730241.2
(22) Anmeldetag: 19.06.2007
(51) Int. Cl.: A47J 31/42, A47J 42/50, G10K 11/16

(54) **GERÄUSCHDÄMMENDER DECKEL FÜR LEBENSMITTELMÜHLEN**
NOISE-ABSORBING LID FOR FOOD MILLS
COUVERCLE ANTIBRUIT DESTINÉ À DES MOULINS POUR PRODUITS ALIMENTAIRES

(30) Priorität: 14.07.2006 DE 102006032712
(43) Veröffentlichungstag der Anmeldung: 08.04.2009
(73) Patentinhaber: BSH Hausgeräte GmbH, 81739 München (DE)
(72) Erfinder: HOLZER, Stefan, 73430 Aalen (DE); BÄR, Winfried, 89551 Königsbronn (DE); FREITAG, Dietmar, 09394 Hohndorf (DE); FÖRSTER, Gerd, 09120 Chemnitz (DE)
(86) Internationale Anmeldenummer: PCT/EP2007/056061
(87) Internationale Veröffentlichungsnummer: WO 2008/006673

(56) Entgegenhaltungen:
- WO-A-02/28244
- US-A1- 2002 092 941

## Beschreibung

Die Erfindung betrifft eine motorisch angetriebene Lebensmittelmühle, insbesondere für einen Kaffeevollautomaten, mit einem Mahlwerk, einem Antriebsmotor dafür, einem Mahlraum für das Mahlwerk, einem Mahlgutbehälter zur Aufnahme und Bevorratung von Körnern oder Bohnen und einem Deckel für den Mahlgutbehälter.

Kaffeevollautomaten sind wegen ihrer Bedienungsfreundlichkeit beliebte und weit verbreitete Ausstattungsgegenstände in Wohnungen und Büros. Ihre Akzeptanz leidet jedoch unter der Geräuschentwicklung, die ihre Benutzung hervorrufen kann. Vor allem in Bereichen, in denen konzentriert gearbeitet oder häufig mit Kundschaft telefoniert wird, ist das Bedienungsgeräusch von lauten Kaffeevollautomaten sehr störend.

Die wesentliche Geräuschquelle einer Lebensmittelmühle ist das Mahlwerk. Es produziert Emissionen von zwei grundsätzlich zu unterscheidenden Arten: Luft- und Körperschallemissionen. Luftschallemissionen beruhen auf in Schwingungen versetzte Umgebungsluft, die als solche unmittelbar an das menschliche Ohr gelangt. Zu ihrer Vermeidung kann der Luftschallweg zwischen der Emissionsquelle und dem menschlichen Ohr z.B. durch ein Gehäuse unterbrochen werden. Luftschalldämmung kann auch durch Luftschallabsorption erreicht werden. Körperschallemissionen dagegen beruhen auf Erschütterungen und Vibrationen von Geräteteilen, die ihrerseits die Umgebungsluft in Vibrationen versetzen und dadurch so genannten sekundären Luftschall hervorrufen. Erst dieser und nicht die Körperschallwellen sind für das menschliche Ohr wahrnehmbar. Zu seiner Vermeidung können entweder die Quellen von Erschütterungen vermieden oder vibrationsempfindliche Bauteile entkoppelt oder der sekundäre Luftschall gedämmt werden.

Aus der US 6 439 106 B1 ist eine Kaffeemaschine bekannt, bei der konstruktive Maßnahmen zur Dämmung des Motorgeräusches ergriffen sind: Neben einer elastischen Lagerung des Motors weist die Kaffeemaschine einen doppelschaligen Deckel auf, um die Schalldämmung der Mahlkammer zu verbessern. Der Aufbau des Deckels ist aber relativ aufwendig und der Deckel verhältnismäßig teuer.

Die WO 02/28244 A offenbart eine elektrische Lebensmittelmühle mit einem Mahlwerk, einem Antriebsmotor dafür, einem Mahlraum für das Mahlwerk, einem Mahlgutbehälter und einen Deckel dafür, wobei der der Deckel den Mahlgutbehälter luftdicht verschließt. Auch die US offenbart eine gattungsgemäße Lebensmittelmühle mit einem Deckel.

Es ist daher Aufgabe der vorliegenden Erfindung, die Schalldämmung von Lebensmittelmühlen im Bereich des Deckels des Mahlgutbehälters kostengünstig zu verbessern.

Diese Aufgabe wird bei einer Lebensmittelmühle der eingangs genannten Art dadurch gelöst, dass der im Wesentlichen aus einem weichen Dämpfungsmaterial bestehende Deckel den Mahlgutbehälter im Wesentlichen luftdicht verschließt. "Luftdicht" ist nicht dahingehend zu verstehen, dass etwa ein nennenswerter Über- oder Unterdruck aufgebaut werden könnte. Vielmehr ist eine exakte Passform des Deckels auf dem Behälter erforderlich, so dass unter Normalbedingungen kein nennenswerter Luftaustausch erfolgen kann. Im Gegensatz zum Stand der Technik nutzt die Erfindung also die Erkenntnis, dass Luftschall nur dann übertragen werden kann, wenn auch ein Luftaustausch stattfindet. Effektive Luftschalldämmung kann demzufolge dadurch erreicht werden, dass ein Luftaustritt aus einem schallbeaufschlagten Raum unterbunden wird. Daher liegt der Deckel erfindungsgemäß nicht lose auf wie bei herkömmlichen Maschinen. Er bewirkt vielmehr einen luftdichten Abschluss des Mahlgutbehälters, indem er mit dem Rand eine nahezu luftundurchlässige mechanische Verbindung eingeht. Ein Schallaustritt ist dadurch wirksam verhindert. Diese Anordnung hat insbesondere bei Kaffeemaschinen den zusätzlichen Vorteil, dass sie das Aroma der Kaffeebohnen im Mahlgutbehälter schützt.

Um einen effektiven Luftschallschutz zu erzielen, muss der Deckel luftdicht schließen. Dazu muss er exakt auf den Behälter aufgesetzt werden. Erfolgt dies nicht, kommt es zu einem unerwünschten Schallaustritt. Nach einer vorteilhaften Ausgestaltung der Erfindung ist der Deckel daher so konstruiert, dass keine separate Bedienungskraft des Benutzers zum luftdichten Verschließen des Mahlgutbehälters erforderlich ist. Richtig auf den Mahlgutbehälter aufgesetzt, verschließt ihn der Deckel gleichsam selbsttätig. Dazu kann das Gewicht des Deckels so hoch gewählt sein, dass die Gewichtskraft einen luftdichten Verschluss bewirkt, den Deckel also in die bestimmungsgemäße abdichtende Position drückt. Unterstützend kann die Dichtung am Deckelrand leicht verformbar ausgestaltet sein, zum Beispiel durch eine entsprechende Formgebung und/oder ein geeignetes weiches Material, so dass sie keine weitere Bedienungskraft zum Luftabschluss mehr erfordert. Der durch seine Gewichtskraft zuverlässig luftdichte Verschluss des Deckels auf dem Mahlgutbehälter bewirkt also eine hohe Bedienungssicherheit.

Nach einer weiteren vorteilhaften Ausgestaltung der Erfindung ist die umlaufende Dichtung am Deckel mit einer Kante am Mahlgutbehälter verschnappbar. Das Verschnappen, das dem Benutzer von Kunststoffvorratsdosen für den Haushalt bekannt ist, gewährleistet also auf mechanischem Weg die Abdichtung des Mahlgutbehälters gegenüber dem Deckel. Außerdem wird dadurch das Einschnappen des dichtenden Verschlusses für den Benutzer auch akustisch wahrnehmbar und überprüfbar. Der luftdichte Verschluss bleibt dem Benutzer damit im Bewusstsein, weil er bei jeder Bedienung akustisch an den korrekten Sitz des Deckels auf dem Mahlgutbehälter erinnert wird und ihn daraufhin überprüfen kann.

Nach einer weiteren vorteilhaften Ausgestaltung der Erfindung weist die Dichtung eine umlaufende Rille, Nut oder Vertiefung auf, in die eine Kante am Rand des Mahlgutbehälters einschnappbar ist. Grundsätzlich können auch die Rille am Mahlgutbehälter und die Kante am Deckel ausgebildet sein. Erforderlich ist jedenfalls ein Zusammenwirken des Randes des Mahlgutbehälters mit dem des Deckels entlang seines gesamten Umfangs. Dafür kann gegebenenfalls auch der Rand des Mahlgutbehälters mit einer entsprechenden umlaufenden weichen Dichtung zu versehen sein. Diese Randgestaltung stellt eine luftdichte mechanische Verbindung zwischen Deckel und Behälter sicher.

Der schalldämmende Effekt des luftdicht schließenden Deckels ist erfindungsgemäß noch dadurch gesteigert, dass der Deckel Schall absorbierend ausgebildet ist. Der Deckel besteht daher im Wesentlichen aus einem weichen Dämpfungsmaterial. Ein derartiges Material bietet eine hohe innere Dämpfung vor allem gegen hohe und daher als besonders unangenehm empfundene Frequenzen. Dabei handelt es sich um ein unelastisches, quasi gelartiges Material, das einer auf sie einwirkenden Kraft kaum eine Rückstellkraft entgegenstellt. Es ist durch eine hohe Kerbschlagzähigkeit gekennzeichnet. Dafür kommen z. B. ein weiches Polyurethan, ein thermoplastisches Polyethylen oder ein hartes Silikonmaterial in Betracht. Es sollte mittels Spritzgussverfahren verarbeitet werden können, um eine preisgünstige Herstellung des Deckels zu ermöglichen.

Wird der Deckel vollständig aus einem derartigen Material hergestellt, erhält er einerseits die gewünschte innere Dämpfung und andererseits auch das nötige Gewicht, um selbsttätig dicht zu schließen. Nach einer weiteren vorteilhaften Ausgestaltung der Erfindung umfasst der Deckel außerdem einen Rahmen, in den ein weiches Dämpfungsmaterial eingesetzt ist. Dieser Zwei-Komponenten-Aufbau vermeidet ein Verziehen des weichen Deckels, da der Rahmen dem Deckel die erforderliche Stabilität verleiht. Als Material für den Rahmen eignet sich z. B. hartes Polyurethan. Umgekehrt kann dafür das Dämpfungsmaterial umso weicher und umso wirkungsvoller sein.

Nach einer weiteren vorteilhaften Ausgestaltung der Erfindung ist der Rahmen in mehrere Teilfelder unterteilt, in die weiche Dämpfungsplatten eingesetzt sind. Der Deckel erhält also gleichsam ein Gerüst, das ein Durchhängen des relativ schweren Deckels verhindert. Das Gerüst wirkt außerdem einem Verziehen des Deckels entgegen, sodass der Deckel jederzeit passgenau auf dem Mahlgutbehälter aufgesetzt werden kann. Der Zwei-Komponenten-Aufbau aus Gerüst einerseits und weichen Dämpfungsplatten andererseits bietet zudem zahlreiche Möglichkeiten, die Deckelfläche ansprechend zu gestalten.

Nach einer weiteren vorteilhaften Ausgestaltung der Erfindung weist der Deckel einen Griff auf, dessen Griffflächen aus dem Dämpfungsmaterial hergestellt sind. Dadurch werden die angenehmen haptischen Eigenschaften des weichen Dämpfungsmaterials zugleich für eine angenehme Bedienung des Deckels genutzt.

Nach einer weiteren vorteilhaften Ausgestaltung der Erfindung verschließt der Deckel einen Mahlgutbehälter mit doppelschaligem Aufbau aus einer Außenschale und einer Innenschale. Dabei wirkt der Deckel nur mit der Außenschale zusammen, indem er diese dicht verschließt. Obwohl also der Mahlgutbehälter doppelschalig aufgebaut ist, kommt nur ein einschaliger Deckel zum Einsatz. Er kommt mit der in der Regel ungedämmten Innenschalung erst gar nicht in Berührung, sodass er deren Vibrationen nicht übernehmen und nicht abstrahlen kann. Anstatt also den doppelschaligen Aufbau und die elastische Lagerung der Innenschale gegenüber der Außenschale auch im Deckel fortzusetzen, wird der Deckel lediglich auf der Außenschale und kontaktfrei gegenüber der Innenschale aufgelegt. Dadurch wird eine besonders kostengünstige Entkoppelung zwischen der Innenschale und dem Deckel erzielt. Der Deckel kann zudem eine aussteifende Funktion für die Außenschale im Bereich ihrer Öffnung übernehmen. Die Außenschale kann daher dünner und damit kostengünstiger dimensioniert werden, da die Lebensmittelmühle nur bei geschlossenem Deckel in Betrieb genommen wird.

Die eingangs genannte Aufgabe wird außerdem durch einen Deckel für einen Mahlgutbehälter einer Lebensmittelmühle der vorbeschriebenen Art gelöst, der den Mahlgutbehälter luftdicht verschließt.

Das Prinzip der Erfindung wird im Folgenden anhand einer Zeichnung beispielshalber noch näher erläutert. In der Zeichnung zeigen:

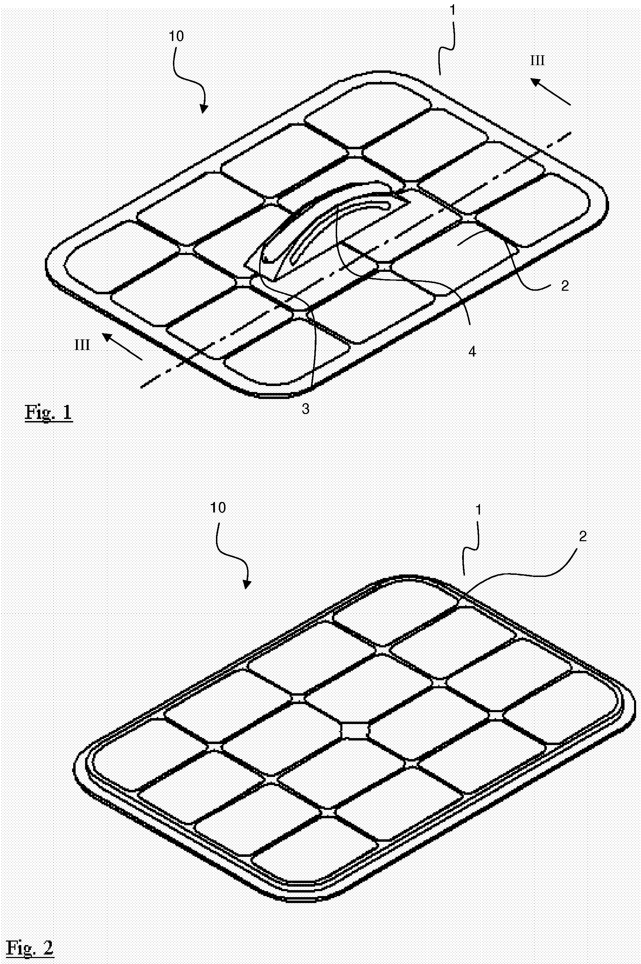

- Figur 1:: eine perspektivische Ansicht eines Deckels von oben,
- Figur 2:: eine perspektivische Ansicht des Deckels von unten,
- Figur 3:: einen Längsschnitt des Deckels gemäß Figur 1,
- Figur 4:: einen Randausschnitt gemäß Figur 3.

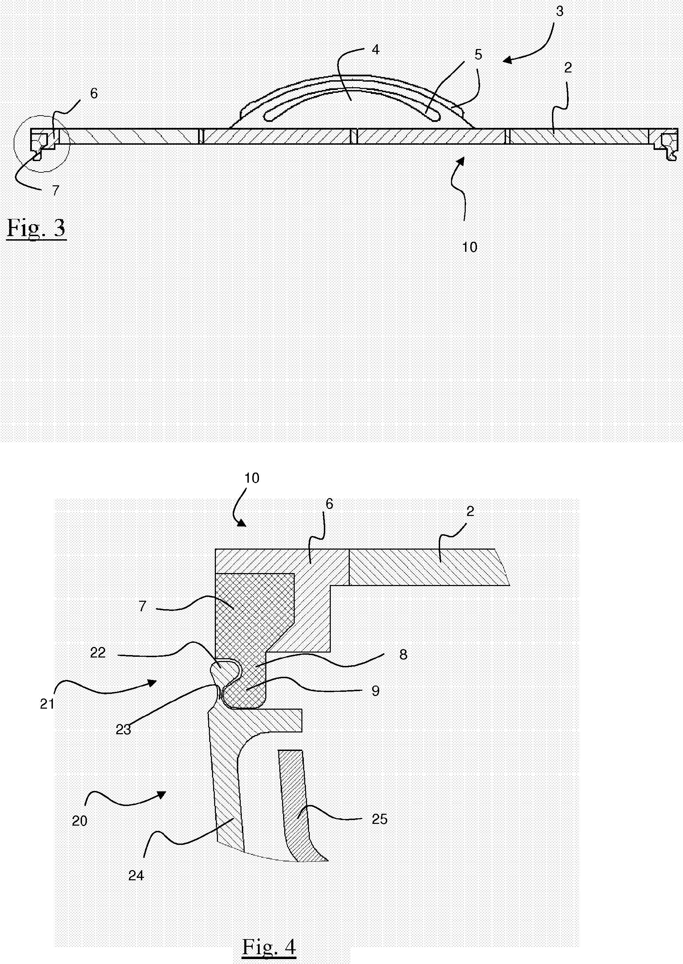

Ein erfindungsgemäßer Deckel setzt sich aus einem Gitterrahmen 1 und mehreren darin befestigten Dämpfungsplatten 2 zusammen. Auf seiner Oberseite trägt der Deckel einen Griff 3 zur Bedienung. Dieser besteht aus einem Kern 4 und darauf aufgesetzten Griffleisten 5. Den Deckel umzieht ein Randbalken 6 als Bestandteil des Gitterrahmens 1 (siehe Figur 3), an dem ein Dichtungsstreifen 7 befestigt ist. Der Dichtungsstreifen 7 weist in seinem unteren freien Abschnitt eine rillenförmige Kehle 8 und eine nasenförmige Verdickung 9 auf (vgl. Figur 4). Er greift in einen entsprechend gestalteten Rand 21 aus einer Rippe 22 als zugehöriger Kante und einer Verjüngung 23 des Mahlgutbehälters 20 ein. Der Rand 21 ist an dessen Außenschale 24 ausgebildet, in ihr ist eine Innenschale 25 angeordnet.

Der Gitterrahmen 1 besteht aus einem stabilen festen Kunststoff, zum Beispiel aus hartem Polyurethan, so dass er für die Stabilität und Formtreue des großflächigen Deckels sorgt. Demgegenüber sind die Dämpfungsplatten 2 aus schwerem und weichem Kunststoff, zum Beispiel einem thermoplastischen Polyethylen oder einem weichen Polyurethan, ausgebildet. Die Dämpfungsplatten 2 weisen damit eine hohe innere Dämpfung auf. Dadurch wirken sie als Schallabsorber der Emissionen aus dem Mahlgutbehälter 20.

Das hohe Gewicht, das der Deckel infolge des Materials für die Dämpfungsplatten 2 erhält, führt zu einem selbstständigen Verschluss des Mahlgutbehälters 20 mit dem Deckel. Dazu ist der Dichtungsstreifen 7 aus einem besonders weichen Material gebildet, so dass er bei Auflage des Deckels auf den Mahlgutbehälter 20 an seiner Kehle 8 nach innen knickt und in den Rand 21 am Mahlgutbehälter 20 einrastet. Im geschlossenen Zustand greift die Rippe 22 des Randes 21 in die Kehle 8 ein. Umgekehrt liegt dann die Verdickung 9 des Dichtstreifens 7 in der Verjüngung 23. Dadurch ist ein luftdichter Verschluss entlang des gesamten Umfangs des Deckels beziehungsweise Mahlgutbehälters 20 gewährleistet. Er bewirkt einerseits einen effektiven Luftschallschutz und andererseits einen Aromaschutz des Mahlguts. Außerdem steift der Deckel die durch ihn verschlossene Öffnung des Mahlgutbehälters 20 aus.

Der Kern 4 des Griffes 3 ist wie der Gitterrahmen 1 aus einem hartem Kunststoff gebildet. Er ist mit dem Gitterrahmen 1 fest verbunden. Auf ihm sind die Griffleisten 5 befestigt. Sie bestehen aus demselben Material wie die Dämpfungsplatten 2. Denn dieses Material hat angenehme haptische Eigenschaften, so dass der Deckel sicher bedient werden kann und seine Bedienung beim Benutzer einen Eindruck von Hochwertigkeit hinterlässt.

### Bezugszeichenliste

- 1: - Gitterrahmen
- 2: - Dämpfungsplatten
- 3: - Griff
- 4: - Kern
- 5: - Griffleisten
- 6: - Randbalken
- 7: - Dichtungsstreifen
- 8: - Kehle
- 9: - Verdickung

- 20: - Mahlgutbehälter
- 21: - Rand
- 22: - Rippe
- 23: - Verjüngung
- 24: - Außenschale
- 25: - Innenschale

## Patentansprüche

1. Elektrische Lebensmittelmühle, insbesondere für einen Kaffeevollautomaten, mit einem Mahlwerk, einem Antriebsmotor dafür, einem Mahlraum für das Mahlwerk, einem Mahlgutbehälter und einem Deckel (10) dafür, wobei der im Wesentlichen aus einem weichen Dämpfungsmaterial bestehende Deckel (10) den Mahlgutbehälter (20) luftdicht verschließt, **dadurch gekennzeichnet, dass** der Deckel (10) einen Rahmen (6) umfasst, in den weiche Dämpfungsplatten eingesetzt sind.

2. Mühle nach Anspruch 1, **dadurch gekennzeichnet, dass** die Gewichtskraft des Deckels (10) als Bedienungskraft für ein dichtes Verschließen des Deckels (10) auf dem Mahlgutbehälter (20) dient.

3. Mühle nach Anspruch 1 oder 2 mit einem Deckel (10) mit umlaufender Dichtung (7), **dadurch gekennzeichnet, dass** die Dichtung (7) mit einem Rand (21) des Mahlgutbehälters (20) verschnappbar ist.

4. Mühle nach dem vorangehenden Anspruch, **dadurch gekennzeichnet, dass** die Dichtung (7) eine umlaufende Rille (8) aufweist, in die eine Kante (22) am Rand (21) des Mahlgutbehälters (20) einschnappbar ist.

5. Mühle nach Anspruch 1, **dadurch gekennzeichnet, dass** der Rahmen (6) in mehrere Teilfelder unterteilt ist, in die die weichen Dämpfungsplatten eingesetzt sind.

6. Mühle nach einem der vorangehenden Ansprüche, **gekennzeichnet durch** einen Deckel (10) mit einem Griff (3) mit Griffflächen (5) aus dem Dämpfungsmaterial.

7. Mühle nach einem der Ansprüche 1 bis 6 mit einem doppelschaligen Mahlgutbehälter (20) mit einer Außenschale (24) und einer Innenschale (25), **dadurch gekennzeichnet, dass** der Deckel (10) nur mit der Außenschale (24) des Mahlgutbehälters (20) dicht schließend ist.

8. Deckel (10) zum Verschließen eines Mahlgutbehälters (20) einer Lebensmittelmühle nach einem der Ansprüche 1 bis 7, wobei der im Wesentlichen aus einem weichen Dämpfungsmaterial bestehende Deckel (10) den Mahlgutbehälter (20) luftdicht verschließt, **dadurch gekennzeichnet, dass** der Deckel (10) einen Rahmen (6) umfasst, in den weiche Dämpfungsplatten eingesetzt sind.

## Claims

1. Electric food mill, in particular for a coffee machine, with a grinder, a drive motor therefor, a grinding chamber for the grinder, a regrind container and a lid (10) therefor, wherein the lid (10), which substantially consists of a soft damping material, closes the regrind container (20) airtight, **characterised in that** the lid (10) comprises a frame (6), into which soft damping plates are inserted.

2. Mill according to claim 1, **characterised in that** the weight force of the lid (10) acts as an operating force for a tight closure of the lid (10) on the regrind container (20).

3. Mill according to claim 1 or 2 having a lid (10) with a peripheral seal (7), **characterised in that** the seal (7) can be snapped on by a rim (21) of the regrind container (20).

4. Mill according to the preceding claim, **characterised in that** the seal (7) has a circumferential groove (8), into which a border (22) on the rim (21) of the regrind container (20) can be snapped.

5. Mill according to claim 1, **characterised in that** the frame (6) is divided into several subfields, into which the soft damping plates are inserted.

6. Mill according to one of the preceding claims, **characterised by** a lid (10) with a handle (3) with grip surfaces (5) made of the damping material.

7. Mill according to one of claims 1 to 6 having a double-shell regrind container (20) with an outer shell (24) and an inner shell (25), **characterised in that** the lid (10) is only tightly closed with the outer shell (24) of the regrind container (20).

8. Lid (10) for closing a regrind container (20) of a food mill according to one of claims 1 to 7, wherein the lid (10), which substantially consists of a soft damping material, closes the regrind container (20) airtight, **characterised in that** the lid (10) comprises a frame (6), into which soft damping plates are inserted.

## Revendications

1. Moulin électrique à aliments, notamment pour une machine à café entièrement automatique, comprenant un broyeur, un moteur d'entraînement pour ce dernier, un espace de broyage pour le broyeur, un récipient de produit broyé et un couvercle (10) pour le récipient, le couvercle (10) constitué essentiellement d'un matériau amortissant souple fermant le récipient (20) de produit broyé de manière étanche à l'air, **caractérisé en ce que** le couvercle (10) comprend un cadre (6) dans lequel des plaques d'amortissement souples sont insérées.

2. Moulin selon la revendication 1, **caractérisé en ce que** le poids du couvercle (10) sert de force de commande pour une fermeture étanche du couvercle (10) sur le récipient (20) de produit broyé.

3. Moulin selon la revendication 1 ou 2, comprenant un couvercle (10) muni d'un joint (7) périphérique, **caractérisé en ce que** le joint (7) est encliquetable avec un bord (21) du récipient (20) de produit broyé.

4. Moulin selon l'une quelconque des revendications précédentes, **caractérisé en ce que** le joint (7) présente une rainure (8) périphérique dans laquelle une arête (22) est encliquetable sur le bord (21) du récipient (20) de produit broyé.

5. Moulin selon la revendication 1, **caractérisé en ce que** le cadre (6) est divisé en plusieurs champs partiels dans lesquels les plaques d'amortissement souples sont insérées.

6. Moulin selon l'une quelconque des revendications précédentes, **caractérisé par** un couvercle (10) muni d'une poignée (3) ayant des surfaces de préhension (5) constituées du matériau amortissant.

7. Moulin selon l'une quelconque des revendications 1 à 6, comprenant un récipient (20) de produit broyé à double coque, muni d'une coque extérieure (24) et d'une coque intérieure (25), **caractérisé en ce que** le couvercle (10) est à fermeture étanche seulement avec la coque extérieure (24) du récipient (20) de produit broyé.

8. Couvercle (10) destiné à fermer un récipient (20) de produit broyé d'un moulin à aliments selon l'une quelconque des revendications 1 à 7, le couvercle (10) constitué essentiellement d'un matériau amortissant souple fermant le récipient (20) de produit broyé de manière étanche à l'air, **caractérisé en ce que** le couvercle (10) comprend un cadre (6) dans lequel des plaques d'amortissement souples sont insérées.
